# FASCICULE DE BREVET EUROPEEN

(11) **EP 2 529 917 B1**
(45) Date de publication et mention de la délivrance du brevet: **28.01.2015**
(21) Numéro de dépôt: 12169869.0
(22) Date de dépôt: 29.05.2012
(51) Int. Cl.: B29C 53/04

(54) **Procédé et dispositif de mise en forme et consolidation à chaud de stratifiés à matrice thermoplastique**
Verfahren und Vorrichtung zur Formgebung und Heißkonsolidierung von Schichtprodukten mit thermoplastischer Matrix
Method and device for hot consolidation and shaping of laminates with thermoplastic matrix

(30) Priorité: 30.05.2011 FR 1154711
(43) Date de publication de la demande: 05.12.2012
(73) Titulaire: Airbus Operations S.A.S., 31060 Toulouse (FR)
(72) Inventeur: Lefort, Marc, 31450 POMPERTUZAT (FR); Dupas, Cédric, 31150 GAGNAC SUR GARONNE (FR)
(74) Mandataire: Gicquel, Olivier Yves Gérard

(56) Documents cités:
- DE-A1- 19 843 969
- DE-U1-202006 018 637
- US-A1- 2006 105 595

## Description

L'invention relève du domaine des structures en matériaux composites. Elle concerne plus particulièrement les procédés de mise en oeuvre de matériaux composites de type à matrice thermoplastique.

### Contexte de l'invention et problème posé

On rappelle préalablement que les structures composites sont généralement réalisées par superposition de nappes ou de tissus minces de fibres (appelées plis) plus ou moins longues de matières minérales ou organiques (verre, carbone, aramide...), éventuellement orientées selon des directions différentes, et solidarisées par un matériau de liaison, typiquement une résine thermoplastique ou thermodurcissable.

Les matériaux composites sont de plus en plus couramment utilisés pour la réalisation de structures soumises à des contraintes mécaniques élevées, tout en devant rester le plus légères possible. En effet, ces structures composites permettent souvent une intégration plus forte des fonctions mécaniques, et une simplification des assemblages.

Leur utilisation est particulièrement courante dans le domaine aéronautique, pour lequel les contraintes de masse de l'appareil, et donc de consommation par passager et kilomètre, sont déterminantes pour la rentabilité de son exploitation, alors même que les contraintes de sécurité sont régulièrement renforcées.

On rappelle également que, parmi les grandes familles de matériaux composites, les matériaux composites à matrice en résine thermoplastique, par exemple de type polyétheréthercétone (PEEK) ou polysulfure de phénylène (PPS), qui peuvent aussi être renforcés avec des fibres courtes, et qui forment l'objet de la présente invention, sont mis en forme par chauffage au dessus d'une température seuil (typiquement de l'ordre de 400°C) et solidifient lors de leur refroidissement, cette solidification étant réversible.

Au contraire, les matériaux composites à matrice en résine thermodurcissable, usuellement associés à des fibres longues, sont mis en forme à basse température ou sous léger chauffage, puis leur configuration est figée par chauffage au dessus d'une température de polymérisation. La transformation est alors irréversible.

Dans l'état actuel de la technique, il n'existe pas de moyens d'obtenir des pièces de grandes dimensions en matériaux composites à matrice thermoplastique, présentant des variations de géométrie brusques. Typiquement, une pièce en « U » ayant des pattes d'une longueur supérieure à 100 mm avec un angle autour de 90°, est difficile à obtenir, car les technologies de pliage sont à proscrire.

### Objectifs de l'invention

La présente invention a donc pour objet de remédier à ce problème. Un second objectif de l'invention est de proposer un dispositif et un procédé simples et peu onéreux de mise en oeuvre.

### Exposé de l'invention

A cet effet, l'invention vise un dispositif de pliage d'une plaque composite stratifiée pré-consolidée, de type à matrice thermoplastique le long d'une arête de pliage, ledit dispositif étant destiné à être inséré avec la plaque dans une enceinte de chauffage, de manière à amener la plaque dans sa plage de température de plasticité,
comportant des moyens d'immobilisation d'une première partie de la plaque, et des moyens pilotables d'application d'une force d'appui sur une seconde partie de la plaque, ces deux parties étant situées de part et d'autre de la ligne de pliage souhaitée,
ces moyens pilotables comportant au moins un élément fusible de température de fusion prédéterminée, choisie au sein de la plage de température de plasticité de la plaque, cet élément fusible étant disposé de manière à empêcher l'application de la force d'appui sur la seconde partie de la plaque, lorsqu'il n'est pas rompu.

Selon une mise en oeuvre particulière, adaptée au cas d'une mise en forme par gravité d'une plaque composite :
- le dispositif comporte un outillage comportant une surface supérieure complémentaire de la forme de la surface inférieure de la plaque,
- les moyens d'immobilisation prennent la forme d'un moyen de pressage d'une partie de la plaque contre la face supérieure de l'outillage,
- les moyens d'application comprennent des contre tôles mobiles présentant une face inférieure de forme complémentaire à la surface supérieure de la seconde partie de la plaque,
- et la force d'appui comprend le poids de la contre tôle sur la seconde partie de la plaque.

Selon une mise en oeuvre plus particulière, chacune des contre tôles, est solidarisée à l'outillage par l'intermédiaire d'une articulation autour d'un axe, parallèle à l'axe longitudinal Y, et situé à équidistance des bords latéraux et supérieurs de l'outillage.

Encore plus particulièrement dans ce cas, au moins un élément fusible est solidarisé, d'une part, à une contre tôle, et, d'autre part, au moyen d'immobilisation.

Dans le but de réaliser deux pliages sur des bords, par exemple opposés de la plaque composite, le dispositif comporte dans une variante favorable des moyens d'application d'une force sur une troisième partie de la plaque, la première partie et la troisième partie étant situées de part et d'autre d'une ligne de pliage souhaitée, et au moins un élément fusible est solidarisé, par chacune de ses extrémités à une contre tôle situées respectivement face à la seconde partie et la troisième partie de la plaque.

Selon un autre mode de réalisation, éventuellement utilisé conjointement, le dispositif comporte également des moyens d'application d'une force sur une troisième partie de la plaque, la première partie et la troisième partie étant situées de part et d'autre d'une ligne de pliage souhaitée, et les éléments fusibles empêchant l'application de la force d'appui sur la seconde partie de la plaque ont une température de fusions différente de celle des éléments fusibles empêchant l'application de la force d'appui sur la troisième partie de la plaque.

Selon un mode de réalisation avantageux, au moins une contre tôle comporte, au voisinage de son bord le plus éloigné de l'angle de pliage de la plaque, une ou plusieurs masses mobiles, solidarisées au bout de tiges, celles-ci étant articulées autour d'axes parallèles à l'axe longitudinal Y de l'outillage, chaque tige étant apte à se mouvoir librement dans une plage angulaire prédéterminée.

Avantageusement dans ce cas, la plage angulaire est comprise entre 20° au dessus du plan de la contre tôle et 80° au dessus de ce plan.

L'invention vise en second lieu un procédé de pliage d'une plaque composite stratifiée pré-consolidée, de type à matrice thermoplastique, ledit procédé comprenant des étapes :
- d'immobilisation d'une première partie de la plaque sur un outillage,
- de mise en place de moyens pilotables d'application d'une force d'appui sur une seconde partie de la plaque, ces deux parties étant situées de part et d'autre de la ligne de pliage souhaitée, et de verrouillage de ces moyens par des éléments fusibles ,
- de chauffage de l'ensemble formé par ce dispositif et la plaque jusqu'à la plage de température de plasticité de ladite plaque composite thermoplastique, et de poursuite du chauffage jusqu'à la température de fusion du ou des éléments fusibles, entraînant ainsi leur rupture et l'application de la force d'appui sur la seconde partie de la plaque,
- de refroidissement de la plaque de manière à la solidifier dans sa nouvelle géométrie.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- Figure 1 : une vue schématique d'une pièce composite déjà consolidée avant mise en oeuvre du procédé selon l'invention,
- Figure 2 : une vue de la même pièce après mise en oeuvre dudit procédé.

### Description détaillée d'un mode de réalisation de l'invention

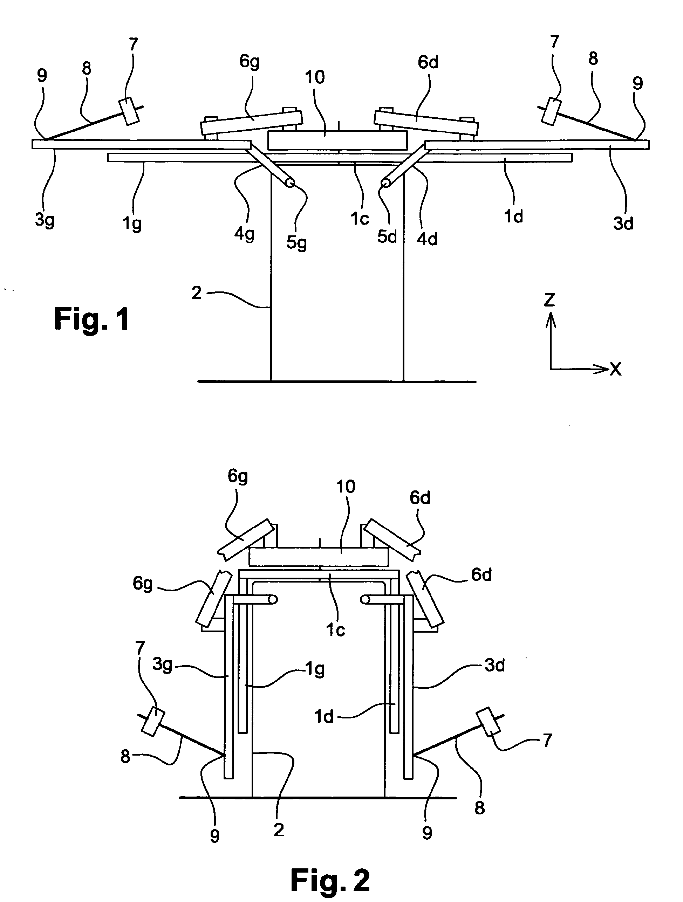

La figure 1 illustre la mise en forme d'une pièce composite 1, de type stratifié à matrice thermoplastique, déjà consolidée. On rappelle qu'on entend par consolidation le processus de chauffage, usuellement réalisé sous vide, qui permet l'imprégnation de nappes de fibres par un matériau thermoplastique, et la solidification de l'ensemble lors du refroidissement. Lors de ce processus, on passe d'un simple empilement de plis indépendants, dont les orientations sont éventuellement différentes et liées à l'usage futur de la pièce, à une plaque rigide ne présentant pas d'interstices vides. Ce procédé est bien connu de l'homme de l'art, et n'est donc pas décrit plus avant ici.

Il est courant de réaliser des plaques dites pré-consolidées, planes, de cette manière, puis de les travailler par thermoformage. En effet, lors d'un nouveau chauffage d'une plaque pré-consolidée, celle-ci entre dans un domaine plastique au dessus d'une certaine température, et elle est alors susceptible de subir des déformations, par exemple par formage dans un moule. Le travail s'effectue dans une plage de températures déterminée, au dessus de la température de transition plastique, et en dessous d'une température de dé-consolidation.

Le procédé de mise en forme selon l'invention s'applique à une plaque composite thermoplastique pré-consolidée 1. Dans le présent exemple nullement limitatif, celle-ci est globalement plane et présente des dimensions de quelques mètres de largeur et de longueur, et une épaisseur de quelques millimètres.

Lorsqu'on souhaite faire subir à cette plaque 1 un pliage de chacun de ses deux bords, ici sensiblement à 90° vers le bas, cete plaque plane pré-consolidée 1 est dans une première étape disposée par sa partie centrale 1 c sur un outillage 2 comportant une surface supérieure également plane.

Cet outillage 2 est ici de forme globalement parallélépipédique, avec une surface supérieure horizontale. On définit pour la suite de la description trois axes sensiblement parallèles aux arêtes de l'outillage 2 : un axe latéral X, un axe longitudinal Y, et un axe vertical Z. La plaque plane pré-consolidée 1 dépasse de l'outillage 2 par ses bords latéraux 1 g, 1 d.

Il est clair que la forme de la partie supérieure et des bords latéraux de l'outillage 2 dépend de la forme finale souhaitée pour la plaque 1. En particulier l'angle entre la partie supérieure et le bord latéral, ici de 90°, qui constitue l'angle de pliage de la plaque, peut être différent selon les formes recherchées.

La plaque plane pré-consolidée 1 et l'outillage sont alors maintenus en position par un moyen de pressage, par exemple un lest 10 présentant une surface inférieure plane, de manière à ne pas blesser la surface supérieure centrale de la plaque plane pré-consolidée 1. La masse et la forme du lest 10 sont adaptés aux caractéristiques géométriques et massiques de la plaque plane pré-consolidée 1. Dans le présent exemple nullement limitatif, le lest est dimensionné de manière à affleurer les bords de la partie supérieure de l'outillage 2. Il est clair cependant qu'une dimension différente peut être envisagée.

Tel qu'on le voit sur la figure 1, on dispose ensuite sur la surface supérieure des deux bords latéraux 1g, 1d de la plaque 1 des contre tôles mobiles 3g, 3d. Ces contre tôles mobiles 3g, 3d présentent une face inférieure de forme complémentaire à la surface supérieure des bords latéraux 1 g, 1 d de la plaque 1. Elles sont donc ici globalement planes. Ces contre tôles sont de largeur égale ou légèrement supérieure à la dimension longitudinale (axe Y) de l'outillage 2.

Chacune des contre tôles, par exemple la contre tôle gauche 3g, est solidarisée à deux bras 4g, disposés de part et d'autre de l'outillage 2, et comportant chacun une articulation autour d'un axe 5g, parallèle à l'axe longitudinal Y, et situé à équidistance des bords latéraux et supérieurs de l'outillage 2.

De cette manière, chaque contre tôle 3g, 3d est susceptible de se rabattre sous son poids le long des côtés de l'outillage 2, en conservant une distance avec ce bord latéral sensiblement égale à l'épaisseur de la plaque 1.

Ces contre tôles sont réalisées ici en matière métallique (ou plus généralement toute matière rigide de température de fusion supérieure à la plage de températures de plasticité de la plaque 1), et leur épaisseur est choisie en fonction de la raideur de la plaque 1 dans sa plage de températures de plasticité, et de la vitesse à laquelle cette plaque doit être pliée.

Dans le présent exemple non limitatif, les bras 4g, 4d comportent des moyens de réglage de la longueur existant entre la contre tôle 3g, 3d et l'articulation 5g, 5d, permettant d'accommoder différentes épaisseurs de plaques composites 1 sur l'outillage 2, tout en maintenant un parallélisme de la surface supérieure de ladite plaque 1 et de la surface inférieure de la contre tôle.

Cette disposition permet également de tenir compte du foisonnement de la plaque thermoplastique lors de son passage en phase plastique, c'est-à-dire de sa variation d'épaisseur.

Lors de leur installation au dessus des bords latéraux 1 g, 1 d de la plaque 1, les contre tôles 3g, 3d sont verrouillées en position horizontale par l'intermédiaire d'éléments fusibles 6g, 6d, solidarisés chacun, d'une part à une contre tôle 3g, 3d, et, d'autre part, au moyen de pressage 3. Dans le présent exemple, chaque contre tôle est retenue en position horizontale par deux éléments fusibles.

Ces éléments fusibles 6g, 6d comportent chacun une zone de rupture (non illustrée figure 1), réalisée en un matériau dont le point de fusion est situé dans la plage de températures de formage de la plaque 1 (entre la température de transition vitreuse et la température de fusion). La nature de ces zones de rupture dépend donc de la composition de la plaque 1 considérée.

En ce qui concerne des dimensions ou matériaux typiques, des essais ont été réalisés avec des stratifiés orientés iso en PEEK (Polyétheréthercétone), d'une épaisseur légèrement supérieure à celle de la plaque à former (par exemple d'environ 10%) car ils ont tendances à chauffer plus rapidement que la plaque, qui est en contact avec les parties métalliques.

On utilise préférentiellement un fusible iso, car ces éléments fusibles 6g, 6d doivent ralentir la descente des contre-plaques.

Ces éléments fusibles 6g, 6d peuvent être remplacés par des câbles métalliques, ou tous systèmes permettant de déclencher et de contrôler la descente des contres plaques)

Chaque contre tôle 3g, 3d comporte enfin, au voisinage de son bord le plus éloigné de l'outillage (et donc de l'angle de pliage de la plaque 1), une ou plusieurs masses mobiles 7, solidarisées au bout de tiges rigides 8, celles-ci étant articulées autour d'axes 9 parallèle à l'axe longitudinal Y de l'outillage. Chaque tige rigide 8 est apte à se mouvoir librement dans une plage angulaire, typiquement comprise entre 20° au dessus du plan de la contre tôle (figure 1) et 80° au dessus de ce plan.

On comprend que sous l'effet de la gravité, lorsque la contre tôle 3g, 3d est horizontale, la tige rigide vient se placer au plus près verticalement de celle-ci, sous l'effet du poids de la masse mobile 7. Au contraire, lorsque la contre tôle 3g, 3d est en position sensiblement verticale, la tige rigide, toujours sous le seul effet de la gravité, vient se placer dans une position pratiquement perpendiculaire à ladite contre tôle.

Une fois la plaque plane pré-consolidée 1 installée sur l'outillage 2, et les contre tôles 3g, 3d mises en place, un traitement thermique est appliqué à l'ensemble. Ce traitement thermique, réalisée dans une enceinte de type connue (non illustrée sur les figures 1 et 2), et utilisant des moyens de chauffage et de régulation sortant du cadre de la présente invention, amène la plaque 1 au dessus de sa température de transition vitreuse, et donc dans sa phase de plasticité.

La plaque 1 commence alors à se ramollir.

La température de l'enceinte est pilotée pour continuer à augmenter jusqu'au dessus de la température de fusion de la zone de rupture de l'élément fusible 6g, 6d. Au moment de la rupture de l'élément fusible 6g, 6d, chaque contre tôle 3g, 3d vient peser sur le bord latéral 1g, 1d de la plaque 1 qui lui correspond, et force donc un pliage accéléré de ce bord latéral le long de l'angle de l'outillage.

Lorsque la contre tôle 3g, 3d atteint un pliage d'environ 70° (complémentaire à 90° de l'angle minimum de 20° ente la tige rigideet la contre tôle associée) la transition entre les deux positions de chaque tige 8, portant une masse mobile 7, se fait très rapidement. Le déplacement rapide de la tige 8 supportant la masse mobile 7 vers sa deuxième position d'équilibre, et son arrêt soudain dans cette position induit alors un transfert brutal d'énergie cinétique de la masse mobile 7 vers la plaque 1 en cours de pliage, ce qui accélère la fin du pliage et le rabattage du bord latéral 1g, 1d de la plaque 1 vers le bord latéral correspondant de l'outillage 2.

A la fin du pliage, l'enceinte est progressivement refroidie, ce qui fige la plaque 1 dans sa nouvelle géométrie.

En fin de pliage, le dispositif et la plaque adoptent une disposition schématisée figure 2.

On comprend que le dispositif, tel qu'exposé, fournit une assistance mécanique lors de la mise en forme par gravité d'une plaque composite stratifiée à matrice thermoplastique, dont le moment de déclenchement est programmé par le choix du matériau composant la zone de rupture de l'élément fusible.

Par ailleurs, en forçant un pliage de la plaque plus rapide qu'il n'aurait lieu naturellement, sous le seul effet de la gravité, le dispositif permet de réaliser le pliage à une température juste supérieure à la température de transition vitreuse, et avec un temps de passage en phase plastique nettement restreint. Une telle disposition peut être particulièrement avantageuse dans le cas où plusieurs opérations successives de formage à chaud sont envisagées, le pliage rapide selon l'invention ne venant pas contrecarrer un formage précédent.

La portée de la présente invention ne se limite pas aux détails des formes de réalisation ci-dessus considérées à titre d'exemple, mais s'étend au contraire aux modifications à la portée de l'homme de l'art.

Dans une variante de réalisation, un élément fusible 6 remplace les éléments fusibles droite 6d et gauche 6g, en reliant directement les deux contre tôles 3g, 3d. Dans cette disposition, lors de la rupture de l'élément fusible, les deux contre tôle sont rabattues simultanément, ce qui assure un comportement analogue des deux côtés de la plaque 1 lors de ce pliage, et garantit donc des caractéristiques mécaniques identiques pour les deux angles créés dans la plaque 1.

La description a été faite avec deux pliages parallèles réalisés sur la plaque 1. Il est clair qu'il est loisible de réaliser un seul pliage, ou des pliages non parallèles, par modification simple de l'outillage utilisé.

De même, la description a été donnée pour le cas d'un pliage par gravité, avec assistance du dispositif de contre tôles 3g, 3d, dont le déplacement s'effectue sous la simple action de la gravité. En variante, il est possible d'utiliser des contre tôles mues par mécanismes de rappel, utilisant par exemple des ressorts.

Toujours en variante, il est possible d'utiliser plusieurs éléments fusibles de température de fusion différents, si l'on souhaite appliquer successivement des forces d'appui sur différentes parties de la plaque composite, ou sur la même partie.

## Revendications

1. Dispositif de pliage d'une plaque (1) composite stratifiée pré-consolidée, de type à matrice thermoplastique le long d'une arête de pliage, ledit dispositif étant destiné à être inséré avec la plaque (1) dans une enceinte de chauffage, de manière à amener la plaque (1) dans sa plage de température de plasticité,
le dispositif comporte des moyens d'immobilisation (10) d'une première partie (1c) de la plaque (1), et des moyens pilotables d'application (3g, 6g) d'une force d'appui sur une seconde partie (1 g) de la plaque (1), ces deux parties étant situées de part et d'autre de la ligne de pliage souhaitée,
ces moyens pilotables comportant au moins un élément fusible (6g) de température de fusion prédéterminée, choisie au sein de la plage de température de plasticité de la plaque (1), cet élément étant disposé de manière à empêcher l'application de la force d'appui sur la seconde partie (1 g) de la plaque, lorsqu'il n'est pas rompu.

2. Dispositif selon la revendication 1, adapté au cas d'une mise en forme par gravité d'une plaque composite (1), **caractérisé :**
- **en ce qu'**il comporte un outillage (2) comportant une surface supérieure complémentaire de la forme de la surface inférieure de la plaque (1),
- **en ce que** les moyens d'immobilisation prennent la forme d'un moyen de pressage (10) d'une partie (1c) de la plaque (1) contre la face supérieure de l'outillage (2),
- **en ce que** les moyens pilotables (3g, 6g) comprennent des contre tôles mobiles (3g) présentant une face inférieure de forme complémentaire à la surface supérieure de la seconde partie (1 g) de la plaque (1),
- et **en ce que** la force d'appui comprend le poids de la contre tôle (3g) sur la seconde partie (1 g) de la plaque (1).

3. Dispositif selon la revendication 2, **caractérisée en ce que** chacune des contre tôles (3g), est solidarisée à l'outillage (2) par l'intermédiaire d'une articulation autour d'un axe (5g), parallèle à l'axe longitudinal Y, et situé à équidistance des bords latéraux et supérieurs de l'outillage (2).

4. Dispositif selon la revendication 3, **caractérisé en ce qu'**au moins un élément fusible (6g) est solidarisé, d'une part, à une contre tôle (3g), et, d'autre part, au moyen d'immobilisation (10).

5. Dispositif selon l'une quelconque des revendications 2 à 4, **caractérisé en ce qu'**il comporte également des moyens d'application (3d, 6d) d'une force sur une troisième partie (1 d) de la plaque (1), la première partie (1c) et la troisième partie (1 d) étant situées de part et d'autre d'une ligne de pliage souhaitée, et **en ce qu'**au moins un élément fusible (6g) est solidarisé, par chacune de ses extrémités à une contre tôle (3g, 3d) situées respectivement face à la seconde partie (1g) et la troisième partie (1 d) de la plaque (1).

6. Dispositif selon l'une quelconque des revendications 2 à 5, **caractérisé en ce qu'**il comporte également des moyens d'application (3d, 6d) d'une force sur une troisième partie (1 d) de la plaque (1), la première partie (1c) et la troisième partie (1d) étant situées de part et d'autre d'une ligne de pliage souhaitée, et **en ce que** les éléments fusibles (6g) empêchant l'application de la force d'appui sur la seconde partie (1g) de la plaque ont une température de fusions différente de celle des éléments fusibles (6d) empêchant l'application de la force d'appui sur la troisième partie (1 d) de la plaque.

7. Dispositif selon l'une quelconque des revendications 2 à 6, **caractérisé en ce qu'**au moins une contre tôle (3g) comporte, au voisinage de son bord le plus éloigné de l'angle de pliage de la plaque (1), une ou plusieurs masses mobiles (7), solidarisées au bout de tiges (8), celles-ci étant articulées autour d'axes (9) parallèle à l'axe longitudinal Y de l'outillage, chaque tige (8) étant apte à se mouvoir librement dans une plage angulaire prédéterminée.

8. Dispositif selon la revendication 7, **caractérisé en ce que** la plage angulaire est comprise entre 20° au dessus du plan de la conte tôle et 80° au dessus de ce plan.

9. Procédé de pliage d'une plaque 1 composite stratifiée pré-consolidée, de type à matrice thermoplastique, le procédé comprend des étapes :
- d'immobilisation d'une première partie (1c) de la plaque (1) sur un outillage (2),
- de mise en place de moyens pilotables d'application (3g, 6g) d'une force d'appui sur une seconde partie (1 g) de la plaque (1), ces deux parties (1c, 1g) étant situées de part et d'autre de la ligne de pliage souhaitée, et de verrouillage de ces moyens par des éléments fusibles (6g),
- de chauffage de l'ensemble formé par ce dispositif et la plaque jusqu'à la plage de température de plasticité de ladite plaque composite thermoplastique (1), et de poursuite du chauffage jusqu'à la température de fusion du ou des éléments fusible (6g), entraînant ainsi leur rupture et l'application de la force d'appui sur la seconde partie (1 g) de la plaque (1),
- de refroidissement de la plaque (1) de manière à la solidifier dans sa nouvelle géométrie.

## Patentansprüche

1. Vorrichtung zum Biegen einer im Voraus verfestigten Schichtverbundplatte (1) des Typs mit thermoplastischer Grundmasse längs einer Biegekante, wobei die Vorrichtung dazu bestimmt ist, mit der Platte (1) in einen Heizbehälter eingesetzt zu werden, derart, dass die Platte (1) in ihren Plastizitätstemperaturbereich gebracht wird,
wobei die Vorrichtung Mittel (10) zum Unbeweglichmachen eines ersten Teils (1c) der Platte (1) und steuerbare Mittel (3g, 6g) zum Ausüben einer Abstützkraft auf einen zweiten Teil (1g) der Platte (1) umfasst, wobei sich diese zwei Teile beiderseits der gewünschten Biegungslinie befinden,
wobei diese steuerbaren Mittel wenigstens ein Element (6g) umfassen, das bei einer vorgegebenen Schmelztemperatur schmelzbar ist, die in dem Plastizitätstemperaturbereich der Platte (1) gewählt ist, wobei dieses Element in der Weise angeordnet ist, dass es die Ausübung der Abstützkraft auf den zweiten Teil (1g) der Platte verhindert, wenn es nicht abgebrochen ist.

2. Vorrichtung nach Anspruch 1, die an den Fall einer Formung durch Schwerkraft einer Verbundplatte (1) angepasst ist, **dadurch gekennzeichnet:**
- **dass** sie ein Werkzeug (2) umfasst, das eine obere Oberfläche aufweist, die zu der Form der unteren Oberfläche der Platte (1) komplementär ist,
- **dass** die Unbeweglichmachungsmittel die Form eines Mittels (10) zum Pressen eines Teils (1c) der Platte (1) gegen die obere Fläche des Werkzeugs (2) annehmen,
- **dass** die steuerbaren Mittel (3g, 6g) eine bewegliche Gegenfläche (3g) aufweisen, die eine untere Oberfläche mit einer zu der oberen Oberfläche des zweiten Teils (1g) der Platte (1) komplementären Form aufweisen,
- und **dass** die Abstützkraft das Gewicht des Gegenblechs (3g) auf dem zweiten Teil (1g) der Platte (1) umfasst.

3. Vorrichtung nach Anspruch 2, **dadurch gekennzeichnet, dass** jedes der Gegenbleche (3g) an dem Werkzeug (2) über ein Gelenk um eine Achse (5g) parallel zu der Längsachse Y, die sich in gleichem Abstand von den seitlichen und oberen Kanten des Werkzeugs (2) befindet, befestigt ist.

4. Vorrichtung nach Anspruch 3, **dadurch gekennzeichnet, dass** wenigstens ein schmelzbares Element (6g) einerseits mit einem Gegenblech (3g) und andererseits mit dem Unbeweglichmachungsmittel (10) verbunden ist.

5. Vorrichtung nach einem der Ansprüche 2 bis 4, **dadurch gekennzeichnet, dass** sie außerdem Mittel (3d, 6d) zum Ausüben einer Kraft auf einen dritten Teil (1d) der Platte (1) umfasst, wobei sich der erste Teil (1c) und der dritte Teil (1d) beiderseits einer gewünschten Biegungslinie befinden, und dass wenigstens ein schmelzbares Element (6g) über jedes seiner Enden, die sich gegenüber dem zweiten Teil (1g) bzw. dem dritten Teil (1d) der Platte (1) befinden, mit einem Gegenblech (3g, 3d) verbunden ist.

6. Vorrichtung nach einem der Ansprüche 2 bis 5, **dadurch gekennzeichnet, dass** sie außerdem Mittel (3d, 6d) zum Ausüben einer Kraft auf einen dritten Teil (1d) der Platte (1) umfasst, wobei sich der ersten Teil (1c) und der dritte Teil (1d) beiderseits einer gewünschten Biegungslinie befinden, und dass die schmelzbaren Elemente (6g), die die Ausübung der Abstützkraft auf den zweiten Teil (1g) der Platte verhindern, eine Schmelztemperatur haben, die von jener der schmelzbaren Elemente (6d), die die Ausübung der Abstützkraft auf den dritten Teil (1d) der Platte verhindern, verschieden ist.

7. Vorrichtung nach einem der Ansprüche 2 bis 6, **dadurch gekennzeichnet, dass** wenigstens ein Gegenblech (3g) in der Umgebung seines Randes, der von dem Biegungswinkel (1) am weitesten entfernt ist, eine oder mehrere bewegliche Massen (7) umfasst, die mit dem Ende von Stiften (8) verbunden sind, wobei diese um Achsen (9) parallel zu der Längsachse Y des Werkzeugs schwenkbar sind, wobei sich jeder Stift (8) in einem vorgegebenen Winkelbereich frei bewegen kann.

8. Vorrichtung nach Anspruch 7, **dadurch gekennzeichnet, dass** der Winkelbereich zwischen 20° über der Ebene des Gegenblechs und 80° über dieser Ebene liegt.

9. Verfahren zum Biegen einer im Voraus verfestigten Schichtverbundplatte (1) des Typs mit thermoplastischer Grundmasse, wobei das Verfahren die folgenden Schritte umfasst:
- Unbeweglichmachen eines ersten Teils (1c) der Platte (1) an einem Werkzeug (2),
- Anordnen steuerbarer Mittel (3g, 6g) zum Ausüben einer Abstützkraft auf einen zweiten Teil (1g) der Platte (1), wobei sich diese zwei Teile (1c, 1g) beiderseits der gewünschten Biegungslinie befinden, und zum Verriegeln dieser Mittel durch schmelzbare Elemente (6g),
- Erwärmen der durch diese Vorrichtung und die Platte gebildeten Anordnung bis zu dem Plastizitätstemperaturbereich der thermoplastischen Verbundplatte (1) und in der Folge des Erwärmens bis zu der Schmelztemperatur des oder der schmelzbaren Elemente (6g), was den Bruch und die Ausübung der Abstützkraft auf den zweiten Teil (1g) der Platte (1) zur Folge hat,
- Abkühlen der Platte (1), derart, dass sie sich in ihrer neuen Geometrie verfestigt.

## Claims

1. Device for folding a sheet (1) of preconsolidated laminated composite, of the type having a thermoplastic matrix, along a folding edge, the said device being intended to be inserted with the sheet (1) into a heating chamber, so as to bring the sheet (1) into its "plastic" temperature range,
the device comprises immobilizing means (10) for immobilizing a first part (1c) of the sheet (1), and controllable means (3g, 6g) for applying bearing force to a second part (1g) of the sheet (1), these two parts being situated one on either side of the desired fold line,
these controllable means comprising at least one meltable element (6g) of predetermined melting point, chosen within the "plastic" temperature range of the sheet (1), this element being positioned in such a way as to prevent the bearing force from being applied to the second part (1g) of the sheet when this element has not broken.

2. Device according to Claim 1, suited to the situation in which a composite sheet (1) is being shaped under gravity, **characterized:**
- **in that** it comprises a fixture (2) comprising a bottom surface that complements the shape of the surface of the sheet (1),
- **in that** the immobilizing means take the form of a pressing means (10) for pressing part (1c) of the sheet (1) against the top face of the fixture (2),
- **in that** the controllable means (3g, 6g) comprise mobile counterplates (3g) having a bottom surface of a shape that complements the top surface of the second part (1g) of the sheet (1),
- and **in that** the bearing force comprises the weight of the counterplate (3g) on the second part (1g) of the sheet (1).

3. Device according to Claim 2, **characterized in that** each of the counterplates (3g) is secured to the fixture (2) by an articulation about an axis (5g) parallel to the longitudinal axis Y and situated equidistant from the lateral and upper edges of the fixture (2).

4. Device according to Claim 3, **characterized in that** at least one meltable element (6g) is secured firstly to a counterplate (3g) and secondly to the immobilizing means (10).

5. Device according to any one of Claims 2 to 4, **characterized in that** it also comprises means (3d, 6d) of applying a force to a third part (1d) of the sheet (1), the first part (1c) and the third part (1d) being situated one on either side of a desired fold line, and **in that** at least one meltable element (6g) is secured, via each of its ends, to a counterplate (3g, 3d) which are situated respectively facing the second part (1g) and the third part (1d) of the sheet (1).

6. Device according to any one of Claims 2 to 5, **characterized in that** it also comprises means (3d, 6d) of applying a force to a third part (1d) of the plate (1), the first part (1c) and the third part (1d) being situated one on either side of a desired fold line, and **in that** the meltable elements (6g) preventing the bearing force from being applied to the second part (1g) of the sheet have a melting point different from that of the meltable elements (6d) preventing the application of the bearing force to the third part (1d) of the sheet.

7. Device according to any one of Claims 2 to 6, **characterized in that** at least one counterplate (3g) comprises, near its free edge furthest from the folding corner of the sheet (1), one or more mobile masses (7) secured to the end of rods (8), these rods being articulated about axes (9) parallel to the longitudinal axis Y of the fixture, each rod (8) being able to move freely through a predetermined angular range.

8. Device according to Claim 7, **characterized in that** the angular range is between 20° above the plane of the counterplate and 80° above this plane.

9. Method for folding a sheet 1 of consolidated laminated composite of the type having a thermoplastic matrix, the method comprises steps:
- of immobilizing a first part (1c) of the sheet (1) on a fixture (2),
- of installing controllable means (3g, 6g) of applying a bearing force to a second part (1g) of the sheet (1), these two parts (1c, 1g) being situated one on either side of the desired fold line, and of locking these means using meltable elements (6g),
- of heating the assembly formed by this device and the sheet to the "plastic" temperature range of the said thermoplastic composite sheet (1) and continuing to heat until the melting point of the meltable element or elements (6g) is or are reached, thus causing them to break and causing the bearing force to be applied to the second part (1g) of the sheet (1),
- of cooling the sheet (1) to cause it to solidify in its new geometry.
